# FASCICULE DE BREVET EUROPEEN

(11) **EP 2 148 102 B1**
(45) Date de publication et mention de la délivrance du brevet: **22.05.2013**
(21) Numéro de dépôt: 09165989.6
(22) Date de dépôt: 21.07.2009
(51) Int. Cl.: F16C 27/04, F16C 39/02, F16C 39/06

(54) **Palier de secours insensible à la charge axiale**
Axiallastunempfindliches Notlager
Axial load-insensitive emergency bearing

(30) Priorité: 25.07.2008 FR 0855131
(43) Date de publication de la demande: 27.01.2010
(73) Titulaire: SOCIETE DE MECANIQUE MAGNETIQUE, 27950 Saint Marcel (FR)
(72) Inventeur: Brunet, Maurice, 27950 Ste Colombe près Vernon (FR); Baudelocque, Luc, 27200 Vernon (FR)
(74) Mandataire: Thévenet, Jean-Bruno

(56) Documents cités:
- EP-B- 1 395 758
- US-A- 5 977 677

## Description

### Domaine de l'invention

La présente invention a pour objet un palier de secours insensible à la charge axiale pour une machine tournante à paliers magnétiques présentant un entrefer moyen par rapport à un rotor, le palier de secours comprenant au moins des premier et deuxième organes de roulement tels qu'un jeu radial dont la valeur εᵣ/2 est de l'ordre de la moitié de l'entrefer radial moyen εᵣ des paliers magnétiques est ménagé entre chacun des premier et deuxième organes de roulement et le rotor, et des jeux axiaux ε_{α} sont ménagés de part et d'autre de l'ensemble des premier et deuxième organes de roulement entre cet ensemble et des premier et deuxième éléments de butée axiale solidaires du rotor.

### Art antérieur

On a déjà décrit, notamment dans les documents de brevet FR 2613791 et EP 1 395 758 B1, un dispositif de secours mécanique dénommé palier de secours, destiné à garantir la totale intégrité d'une machine tournante à paliers magnétiques actifs, en cas de surcharge des paliers magnétiques ou en cas de défaillance du dispositif de contrôle électrique ou électronique ou encore lors d'un arrêt de la suspension magnétique.

Dans le document EP 1 395 758 B1, on a en particulier proposé un palier de secours comprenant comme illustré sur la figure 2, un double roulement comprenant pour chaque roulement une bague statorique 1, une bague rotorique 2 et des éléments de roulement 3 disposés entre les bagues statorique 1 et rotorique 2. Les bagues rotoriques 2 sont séparées du rotor 6 par un jeu radial 4 et sont également séparées des premier et deuxième éléments de butée axiale 7, 8 par des jeux axiaux 5.

Un élément intermédiaire de support 9 est interposé entre les bagues statoriques 1 et un élément statorique 10, avec un jeu radial 11, 13 par rapport à l'élément statorique 10 qui est fixé au stator 15. Des ressorts 12 fixés des deux côtés extrêmes de l'élément intermédiaire de support 9 agissent axialement sur l'organe de roulement en exerçant une précharge bidirectionnelle. Un moyen d'amortissement dans le sens radial est interposé dans le jeu 13 et un moyen de contact à très faible frottement 14 est réalisé entre les faces opposées perpendiculairement à l'axe de rotation, des éléments intermédiaires 9 et statorique 10.

Un tel dispositif de secours peut jouer son rôle d'amortisseur quel que soit le sens de la charge axiale. Toutefois, un tel type de montage ne permet pas d'éviter les dilatations thermiques du roulement dans son logement, lesquelles dilatations thermiques sont susceptibles de contraindre fortement les billes et les bagues et d'entraîner une destruction du roulement.

Pour remédier à cet inconvénient, une solution envisageable pourrait consister à interposer un second dispositif élastique 13' pouvant être analogue au moyen d'amortissement interposé dans le jeu 13, à l'interface entre les bagues extérieures 1 du roulement constituant les bagues statoriques et l'élément intermédiaire 9 servant de support à ces bagues statoriques, afin d'autoriser des dilatations sans contrainte du roulement.

Bien qu'apportant une amélioration à l'art antérieur et permettant de résoudre le problème des dilatations thermiques, une telle solution présente cependant l'inconvénient d'augmenter la déflexion radiale du montage.

### Définition et objet de l'invention

La présente invention vise à remédier aux inconvénients précités et à réaliser un palier de secours présentant une grande sécurité de fonctionnement et une usure limitée.

L'invention vise plus particulièrement à permettre à la fois de limiter l'élévation de température du roulement et les conséquences des dilatations thermiques du roulement et à limiter la déflexion radiale du montage.

Ces buts sont atteints grâce à un palier de secours insensible à la charge axiale pour une machine tournante à paliers magnétiques présentant un entrefer moyen par rapport à un rotor, le palier de secours comprenant au moins des premier et deuxième organes de roulement tels qu'un jeu radial dont la valeur εᵣ/2 est de l'ordre de la moitié de l'entrefer radial moyen εᵣ des paliers magnétiques est ménagé entre chacun des premier et deuxième organes de roulement et le rotor, et des jeux axiaux ε_{α} sont ménagés de part et d'autre de l'ensemble des premier et deuxième organes de roulement entre cet ensemble et des premier et deuxième éléments de butée axiale solidaires du rotor, **caractérisé en ce que** le premier organe de roulement est monté directement dans un premier élément intermédiaire de support coaxial à un élément statorique, en ce que le deuxième organe de roulement est monté dans un deuxième élément intermédiaire de support également coaxial audit élément statorique, en ce que les premier et deuxième éléments intermédiaires de support présentent un plan de contact selon un plan radial perpendiculaire à l'axe du palier et sont réunis par un élément de précontrainte élastique agissant dans le sens axial en autorisant une dilatation ou un écartement des premier et deuxième éléments intermédiaires de support et des premier et deuxième organes de roulement dans le sens axial, et en ce qu'un moyen d'amortissement dans le sens radial est interposé entre d'une part les premier et deuxième éléments intermédiaires de support et d'autre part l'élément statorique.

De façon plus particulière, le palier de secours comprend deux plaques annulaires d'extrémité présentant un très faible coefficient de frottement qui sont fixées sur l'élément statorique et entre lesquelles les éléments intermédiaires de support sont insérés avec jeu.

L'élément de précontrainte élastique peut comprendre un ressort hélicoïdal.

Selon un premier mode de réalisation possible, le moyen d'amortissement comprend un ruban métallique ondulé intercalé entre les faces cylindriques opposées des éléments intermédiaires de support et de l'élément statorique centrées sur l'axe du palier.

Selon un autre mode de réalisation possible, le moyen d'amortissement comprend un anneau visco-élastique intercalé entre les faces cylindriques opposées des éléments intermédiaires de support et de l'élément statorique centrées sur l'axe du palier.

Selon une première application de l'invention, le palier de secours comprend un rotor central et des premier et deuxième organes de roulement disposés à l'extérieur autour de ce rotor central.

Selon une autre application de l'invention, le palier de secours comprend un rotor périphérique en forme de tube et des premier et deuxième organes de roulement disposés à l'intérieur face au rotor périphérique.

### Brève description des dessins

D'autres caractéristiques et avantages de l'invention ressortiront de la description de modes particuliers de réalisation, donnés à titre d'exemples, en références aux dessins annexés, sur lesquels :
- la figure 1 est une vue en demi-coupe axiale d'un palier de secours selon l'invention, adapté pour limiter à la fois l'élévation de température du roulement et la déflexion radiale, et
- la figure 2 est une vue en demi-coupe axiale d'un palier de secours de l'art antérieur modifié pour réduire les effets d'une élévation de température du roulement.

### Description détaillée de modes de réalisation préférentiels

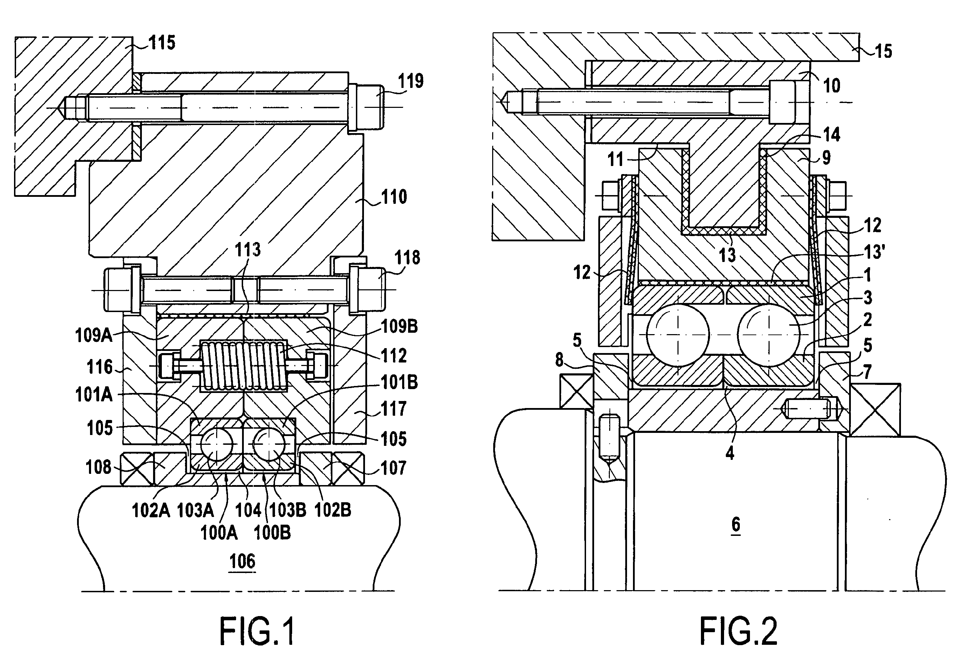

On a représenté sur la figure 1 un mode de réalisation préférentiel d'un palier de secours conforme à l'invention.

Le palier de secours illustré sur la figure 1 est destiné à être utilisé en combinaison avec un palier magnétique actif non représenté sur le dessin.

On voit sur la figure 1 un rotor 106 et un stator 115 qui peuvent présenter différentes configurations, c'est-à-dire qu'en particulier le rotor 106 peut être soit à l'intérieur, soit à l'extérieur du stator 115.

Le palier de secours comprend essentiellement un double roulement 100A, 100B. Chaque roulement 100A, 100B comprend une bague statorique 101A, respectivement 101B, une bague rotorique 102A respectivement 102B et des éléments de roulement 103A respectivement 103B disposés entre les bagues statorique et rotorique 101A, 102A, respectivement 101 B, 102B.

En service normal des paliers magnétiques radiaux auxquels est associé le palier de secours, les bagues rotoriques 102A, 102B, des roulements sont séparées du rotor 106 par un jeu radial 104 dont la valeur εᵣ/2 est de l'ordre de la moitié de celle de l'entrefer εᵣ des paliers magnétiques.

La valeur du jeu radial εᵣ/2 peut être avantageusement comprise entre 0,15 mm et 0,3 mm mais peut aussi se situer en dehors de ces valeurs suivant l'application.

Les bagues rotoriques 102A respectivement 102B sont séparées respectivement d'un premier élément de butée axiale 107 et d'un deuxième élément de butée axiale 108 par des jeux axiaux 105 dont la valeur εₐ est avantageusement comprise entre environ 0,2 mm et 0,5 mm mais peut aussi se situer en dehors de ces valeurs suivant l'application. Ces jeux axiaux permettent au roulement de présenter un mouvement axial dans les deux sens lors d'une charge axiale.

Conformément à l'invention, le premier roulement 100A est monté dans un premier élément de support intermédiaire 109A. Un moyen amortisseur 113 est interposé entre ce premier élément de support intermédiaire 109A et un élément de support 110 qui est fixé au stator 115 à l'aide d'éléments de liaison 119 tels que des vis.

Le deuxième roulement 100B est également monté dans un deuxième élément de support intermédiaire 109B. Le moyen amortisseur 113 est également interposé entre ce deuxième élément de support intermédiaire 109B et l'élément de support statorique 110.

Les premier et deuxième éléments intermédiaires de support 109A, 109B présentent un plan de contact selon un plan radial perpendiculaire à l'axe du palier et du rotor 106. Les deux éléments intermédiaires de support 109A, 109B sont réunis par un élément de précontrainte élastique 112, par exemple sous la forme d'un ressort hélicoïdal qui agit dans le sens axial en autorisant une dilatation des premier et deuxième roulements grâce à l'écartement des éléments intermédiaires 109A, 109B et des premier et deuxième roulements dans le sens axial.

Les éléments intermédiaires de support 109A, 109B sont insérés avec jeu entre deux plaques annulaires d'extrémité 116, 117 qui sont fixées sur l'élément statorique 110 à l'aide de moyens de liaison 118 tels que des boulons. Ces plaques sont choisies pour avoir un très faible coefficient de frottement et une surface maximale.

Le moyen d'amortissement 113, intercalé entre des faces cylindriques des éléments de support intermédiaires 109A, 109B situées du côté du stator et une face cylindrique de l'élément statorique 110 située en regard des éléments de support intermédiaires 109A, 109B peut être constitué par un ruban métallique ondulé ou par un anneau visco-élastique.

Les roulements 100A et 100B sont encastrés respectivement dans les premier et deuxième éléments intermédiaires de support 109A, 109B du côté opposé au plan de contact des éléments intermédiaires 109A, 109B.

Quelle que soit la charge axiale appliquée au système de palier de secours, le frottement radial venant de cette charge axiale ne peut s'opposer au libre mouvement radial du système grâce au faible coefficient de frottement des plaques 116 et 117.

Les roulements 100A et 100B sont montés directement dans les éléments intermédiaires de support 109A, 109B qui constituent deux éléments de support mis en précharge élastique par le ressort 112. Compte tenu des excellents contacts thermiques entre les bagues statoriques 101A, 101B et les éléments intermédiaires de support 109A, 109B, les dilatations thermiques de ces bagues statoriques 101A, 101B sont fortement limitées.

Par ailleurs, sous l'effet de la dilatation thermique des bagues rotoriques 102A, 102B et des billes 103A, 103B, ces dernières exercent une pression sur les bagues statoriques 101A, 101B suivant l'angle de contact des roulements. Sous cet effort, les deux éléments intermédiaires de support 109A, 109B peuvent s'écarter sans contrainte excessive d'une pièce quelconque de l'ensemble.

Le montage qui vient d'être décrit présente ainsi le double avantage de limiter la déflexion radiale, grâce à l'absence d'interposition d'un quelconque moyen d'amortissement entre les bagues statoriques 101A, 101B et les éléments intermédiaires de support 109A, 109B, et de limiter l'élévation de température des roulements ainsi que les risques de destruction liés aux dilatations dès lors que les éléments intermédiaires de support 109A, 109B en au moins deux parties peuvent se dilater ou s'écarter sans contrainte et autorisent l'écartement des bagues statoriques 101A, 101B des roulements ainsi que des dilatations sans contrainte des roulements.

## Revendications

1. Palier de secours insensible à la charge axiale pour une machine tournante à paliers magnétiques présentant un entrefer moyen par rapport à un rotor (106), le palier de secours comprenant au moins des premier et deuxième organes de roulement (100A, 100B) tels qu'un jeu radial (104) dont la valeur εᵣ/2 est de l'ordre de la moitié de l'entrefer radial moyen εᵣ des paliers magnétiques est ménagé entre chacun des premier et deuxième organes de roulement (100A, 100B) et le rotor (106), et des jeux axiaux ε_{α} (105) sont ménagés de part et d'autre de l'ensemble des premier et deuxième organes de roulement (100A, 100B) entre cet ensemble et des premier et deuxième éléments de butée axiale (107, 108) solidaires du rotor (106), **caractérisé en ce que** le premier organe de roulement (100A) est monté directement dans un premier élément intermédiaire de support (109A) coaxial à un élément statorique (110), **en ce que** le deuxième organe de roulement (100B) est monté dans un deuxième élément intermédiaire de support (109B) également coaxial audit élément statorique (110), **en ce que** les premier et deuxième éléments intermédiaires de support (109A, 109B) présentent un plan de contact selon un plan radial perpendiculaire à l'axe du palier et sont réunis par un élément de précontrainte élastique (112) agissant dans le sens axial en autorisant une dilatation ou un écartement des premier et deuxième éléments intermédiaires de support (109A, 109B) et des premier et deuxième organes de roulement (100A, 100B) dans le sens axial, et **en ce qu'**un moyen d'amortissement (113) dans le sens radial est interposé entre d'une part les premier et deuxième éléments intermédiaires de support (109A, 109B) et d'autre part l'élément statorique (110).

2. Palier de secours selon la revendication 1, **caractérisé en ce qu'**il comprend deux plaques annulaires d'extrémité (116,117) présentant un très faible coefficient de frottement qui sont fixées sur l'élément statorique (110) et entre lesquelles les éléments intermédiaires de support (109A, 109B) sont insérés avec jeu.

3. Palier de secours selon la revendication 1 ou la revendication 2, **caractérisé en ce que** l'élément de précontrainte élastique (112) comprend un ressort hélicoïdal.

4. Palier de secours selon l'une quelconque des revendications 1 à 3, **caractérisé en ce que** le moyen d'amortissement (113) comprend un ruban métallique ondulé intercalé entre les faces cylindriques opposées des éléments intermédiaires de support (109A, 109B) et de l'élément statorique (110) centrées sur l'axe du palier.

5. Palier de secours selon l'une quelconque des revendications 1 à 3, **caractérisé en ce que** le moyen d'amortissement (113) comprend un anneau viscoélastique intercalé entre les faces cylindriques opposées des éléments intermédiaires de support (109A, 109B) et de l'élément statorique (110) centrées sur l'axe du palier.

6. Palier de secours selon l'une quelconque des revendications 1 à 5, **caractérisé en ce qu'**il comprend un rotor central (106) et des premier et deuxième organes de roulement (100A, 100B) disposés à l'extérieur autour de ce rotor central (106).

7. Palier de secours selon l'une quelconque des revendications 1 à 5, **caractérisé en ce qu'**il comprend un rotor périphérique en forme de tube et des premier et deuxième organes de roulement disposés à l'intérieur face au rotor périphérique.

## Patentansprüche

1. Axiallastunempfindliches Notlager für eine umlaufende Maschine mit Magnetlagern, die einen mittleren Luftspalt gegenüber einem Rotor (106) aufweisen, wobei das Notlager wenigstens ein erstes und ein zweites Wälzorgan (100A, 100B) umfaßt, die derart sind, daß ein Radialspiel (104), dessen Wert εᵣ/2 in der Größenordnung von der Hälfte des mittleren radialen Luftspalts εᵣ der Magnetlager liegt, zwischen jedem der ersten und zweiten Wälzorgane (100A, 100B) und dem Rotor (106) ausgespart ist und daß Axialspiele ε_{α} (105) auf beiden Seiten der Anordnung aus erstem und zweitem Wälzorgan (100A, 100B) zwischen dieser Anordnung und einem ersten und einem zweiten Axialanschlagelement (107, 108), die mit dem Rotor (106) fest verbunden sind, ausgespart sind, **dadurch gekennzeichnet, daß** das erste Wälzorgan (100A) direkt in einem ersten Zwischentragelement (109A), welches zu einem Statorelement (110) koaxial ist, angebracht ist, daß das zweite Wälzorgan (100B) in einem zweiten Zwischentragelement (109B), welches ebenfalls zu dem Statorelement (110) koaxial ist, angebracht ist, daß das erste und das zweite Zwischentragelement (109A, 109B) eine Kontaktebene entlang einer zu der Achse des Lagers senkrechten Radialebene aufweisen und durch ein elastisches Vorspannelement (112) verbunden sind, das in axialer Richtung wirkt und dabei eine Ausdehnung oder ein Spreizen der ersten und zweiten Zwischentragelemente (109A, 109B) und der ersten und zweiten Wälzorgane (100A, 100B) in axialer Richtung zuläßt, und daß ein Mittel zur Dämpfung (113) in radialer Richtung zwischen einerseits den ersten und zweiten Zwischentragelementen (109A, 109B) und andererseits dem Statorelement (110) eingefügt ist.

2. Notlager nach Anspruch 1, **dadurch gekennzeichnet, daß** es zwei ringförmige Endplatten (116, 117) mit einem sehr geringen Reibungskoeffizienten umfaßt, die an dem Statorelement (110) befestigt sind und zwischen denen die Zwischentragelemente (109A, 109B) mit Spiel eingefügt sind.

3. Notlager nach Anspruch 1 oder Anspruch 2, **dadurch gekennzeichnet, daß** das elastische Vorspannelement (112) eine Schraubenfeder umfaßt.

4. Notlager nach einem der Ansprüche 1 bis 3, **dadurch gekennzeichnet, daß** das Dämpfungsmittel (113) ein gewelltes Metallband umfaßt, das zwischen den auf die Achse des Lagers zentrierten, gegenüberliegenden Zylinderflächen der Zwischentragelemente (109A, 109B) und des Statorelements (110) eingefügt ist.

5. Notlager nach einem der Ansprüche 1 bis 3, **dadurch gekennzeichnet, daß** das Dämpfungsmittel (113) einen viskoelastischen Ring umfaßt, der zwischen den auf die Achse des Lagers zentrierten, gegenüberliegenden Zylinderflächen der Zwischentragelemente (109A, 109B) und des Statorelements (110) eingefügt ist.

6. Notlager nach einem der Ansprüche 1 bis 5, **dadurch gekennzeichnet, daß** es einen mittleren Rotor (106) sowie ein erstes und ein zweites Wälzorgan (100A, 100B), die außen um diesen mittleren Rotor (106) angeordnet sind, umfaßt.

7. Notlager nach einem der Ansprüche 1 bis 5, **dadurch gekennzeichnet, daß** es einen rohrförmigen Umfangsrotor sowie ein erstes und ein zweites Wälzorgan, die innen gegenüber dem Umfangsrotor angeordnet sind, umfaßt.

## Claims

1. An emergency rolling bearing that is insensitive to axial load, for a rotary machine having magnetic bearings presenting a mean air gap relative to a rotor (106), the emergency bearing comprising at least first and second bearing members (100A, 100B) such that radial clearance (104) of value ε_{r/}2 that is of the order of half the mean radial air gap εᵣ of the magnetic bearings is provided between each of the first and second bearing members (100A, 100B) and the rotor (106), and axial clearances εₐ (105) are formed on either side of the first and second bearing members (100A, 100B) between said assembly and first and second axial abutment elements (107, 108) secured to the rotor (106), **characterized in that** the first bearing member (100A) is mounted directly in a first intermediate support element (109A) that is coaxial with a stator element (110), **in that** the second bearing member (100B) is mounted in a second intermediate support element (109B) that is likewise coaxial with said stator element (110), **in that** the first and second intermediate support elements (109A, 109B) present a plane of contact in a radial plane perpendicular to the axis of the bearing and are united by a resilient pre-stressed element (112) acting in the axial direction and allowing the first and second intermediate support elements (109A, 109B) and the first and second bearing members (100A, 100B) to expand or move apart in the axial direction, and **in that** damper means (113) in the radial direction are interposed between firstly the first and second intermediate support elements (109A, 109B) and secondly the stator element (110).

2. An emergency bearing according to claim 1, **characterized in that** it includes two annular end plates (116, 117) presenting a very low coefficient of friction that are fastened to the stator element (110) and between which the intermediate support elements (109A, 109B) are inserted with clearance.

3. An emergency bearing according to claim 1 or claim 2, **characterized in that** the resilient pre-stressed element (112) comprises a helical spring.

4. An emergency bearing according to any one of claims 1 to 3, **characterized in that** the damper means (113) comprise a corrugated metal ribbon interposed between the facing cylindrical faces of the intermediate support elements (109A, 109B) and the stator element (110) centered on the axis of the bearing.

5. An emergency bearing according to any one of claims 1 to 3, **characterized in that** the damper means (113) comprise a visco-elastic ring interposed between the facing cylindrical faces of the intermediate support elements (109A, 109B) and the stator element (110) centered on the axis of the bearing.

6. An emergency bearing according to any one of claims 1 to 5, **characterized in that** it includes a central rotor (106) and first and second bearing members (100A, 100B) disposed on the outside around said central rotor (106).

7. An emergency bearing according to any one of claims 1 to 5, **characterized in that** it includes a peripheral rotor of tubular shape and first and second bearing members disposed on the inside facing the peripheral rotor.
